Europäisches Patentamt

European Patent Office

Office européen des brevets

(19)

(11) Numéro de publication: **0 127 491 B1**

(12) **FASCICULE DE BREVET EUROPÉEN**

(45) Date de publication du fascicule du brevet:
22.07.87

(51) Int. Cl.⁴: **C 04 B 35/80**, C 04 B 35/52

(21) Numéro de dépôt: **84400750.0**

(22) Date de dépôt: **16.04.84**

(54) **Matériaux composites constitués par une matrice en carbone coke de résine, renforcée par des fibres réfractaires revêtues de carbone pyrolytique, et procédé pour leur obtention.**

(30) Priorité: **19.04.83 FR 8306369**

(43) Date de publication de la demande:
**05.12.84 Bulletin 84/49**

(45) Mention de la délivrance du brevet:
**22.07.87 Bulletin 87/30**

(84) Etats contractants désignés:
**AT BE CH DE FR GB IT LI LU NL SE**

(56) Documents cité:
**DE-A-2 103 906**
**FR-A-2 062 169**
**FR-A-2 094 134**
**FR-A-2 401 888**
**FR-A-2 404 524**

**CHEMICAL ABSTRACTS, vol. 91, no. 12, septembre 1979, page 125, no. 93693v, Columbus, Ohio, USA; J.J. GEBHARDT: "Surface effects in high pressure coal tar pitch pyrolysis"**
**CHEMICAL ABSTRACTS, vol. 89, no. 10, septembre 1978, page 234, no. 79097f, Columbus, Ohio, USA; D.H. LEEDS: "Metal impregnated carbons"**

(73) Titulaire: **SOCIETE EUROPEENNE DE PROPULSION, 24 rue Salomon Rothschild, F-92150 Suresnes (FR)**

(72) Inventeur: **Thebault, Jacques, 27, Rue de Colmar, F-33000 Bordeaux (FR)**

(74) Mandataire: **Combe, André, CABINET BEAU DE LOMENIE 55, rue d'Amsterdam, F-75008 Paris (FR)**

EP 0 127 491 B1

LIBER, STOCKHOLM 1987

## Description

On a déjà decrit le revêtement de fibres de carbone avec du carbone pyrolytique (dénommé "pyrocarbone"). Les produits obtenus (fibres revêtues) ont été utilisés pour la préparation de matériaux composites comportant donc des fibres revêtues et une matrice composée d'une résine organique. Les matériaux composites ainsi obtenus présentent des propriétés mécaniques améliorées par rapport à celles des matériaux correspondants obtenus en utilisant des fibres de carbone non revêtues de pyrocarbone; cette amélioration des propriétés est attribuée à une augmentation des forces de liaison entre les fibres de carbone revêtues et la résine utilisée comme matrice.

On a déjà décrit par ailleurs des matériaux composites constitués de fibres de renforcement (5 à 65 % en volume de fibres de carbone ou de carbure de silicium par exemple) dans une matrice en carbone en particulier en coke de résine. De tels matériaux sont obtenus en carbonisant une préforme constituée de fibres de renforcement et d'une résine organique.

Il a été trouvé, et c'est là l'objet de la présente invention que les propriétés de matériaux composites ci-dessus, constitués de fibres de renforcement (fibres de carbone ou de carbure de silicium par exemple) et d'une matrice de carbone étaient améliorées lorsqu'on utilisait, pour la préparation desdits matériaux des fibres de renforcement revêtues de pyrocarbone.

L'action du pyrocarbone déposé sur les fibres réfractaires est différente:

- d'une part du mode d'action de ce même pyrocarbone dans les matériaux composites comportant des fibres de carbone et une résine organique

- d'autre part du mode d'action de ce même pyrocarbone dans la confection de matériaux comportant des fibres de renforcement (revêtues de pyrocarbone) et du brai que l'on décompose ultérieurement pour donner naissance à un coke;

en effet l'action bénéfique du pyrocarbone se produit lors de la transformation de la résine (précurseur du coke de résine) en coke de résine.

Le caractère non évident de l'invention provient donc de ce que:

- d'une part on a trouvé que dans les matériaux composites fibres de carbone matrice carbone coke de résine il convenait pour améliorer les propriétés, d'assurer initialement une diminution des forces de liaison entre fibres et matrice,

- d'autre part on a trouvé qu'il était possible de réaliser cette diminution des forces de liaison en revêtant les fibres de carbone avec du carbone pyrolytique.

La présente invention concerne les produits nouveaux composites présentant des propriétés améliorées, comportant des fibres de renforcement et une matrice en carbone, caractérisés en ce que chaque fibre de renfort fibreux a été revêtue avant son utilisation d'une couche de carbone obtenu par dépôt chimique en phase gazeuese dont l'épaisseur est comprise entre 0,01 et 1,0 µm. Comme fibres de renforcement (renfort fibreux), on peut utiliser n'importe quel produit connu à cet effet dans les matériaux composites. On peut citer par exemple des fibres en carbone, en carbure de silicium, en carbures divers, en bore nitrure de bore,...

La seule condition étant que la fibre soit suffisamment réfractaire pour supporter sans dégradation notable le dépôt de pyrocarbone (T ≅ 1 000° C).

Lesdites fibres de renforcement peuvent être utilisées sous toutes les formes connues comme par exemple des mèches, des tissus, des tresses des feutres,...

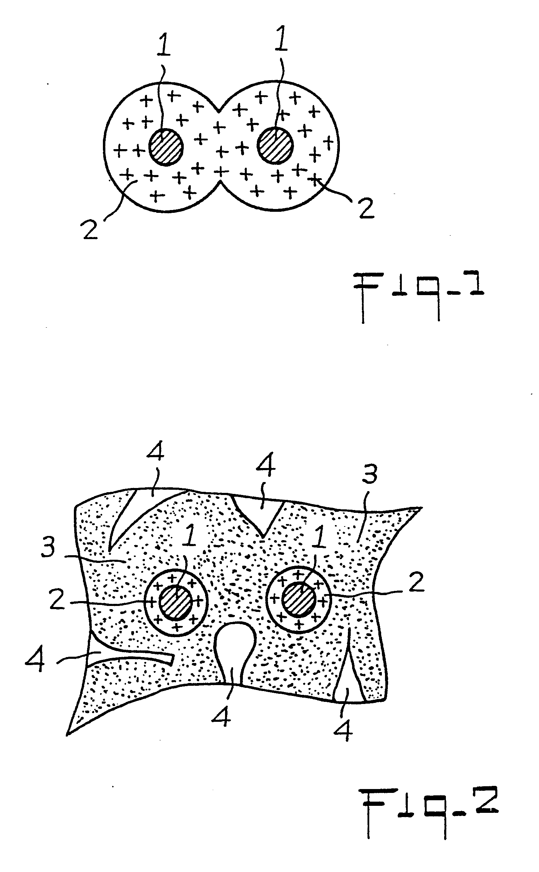

Un des points particuliers à signaler comme particulièrement important est que l'épaisseur du pyrocarbone déposé sur les fibres élémentaires est volontairement limitée. Ceci a pour intérêt de conserver à la strate élémentaire (mèche, tissu, feutre...) une souplesse de non-fragilité particulièrement appréciable car elle permet alors de déformer cette strate et d'obtenir, par moulage par exemple, une forme complexe sans dégrader ladite strate. Cette épaisseur limitée permet de différencier également ce type d'élaboration et de matériau, des composites carbone-carbone à matrice initialement (c'est-à-dire en contact avec les fibres) en pyrocarbone qui sont connus par ailleurs. Dans ce dernier type de matériau en effet le dépôt de pyrocarbone est épais (épaisseur) 5 µm par exemple) et assure la liaison mécanique entre deux fibres adjacentes (figure 1) alors que dans la présente invention c'est le coke de résine qui assure cette liaison puisque le dépôt de pyrocarbone est de faible épaisseur (figure 2) et donc que les fibres élémentaires restent individualisées après le traitement relatif à l'invention.

Les figures 1 et 2 illustrent l'invention; ces figures représentent schématiquement une coupe d'un matériau selon l'art antérieur (figure 1) et selon l'invention (figure 2); sur ces figures on a représenté en 1 les fibres de renforcement, en 2 le pyrocarbone (qui dans l'art antérieur réalise la liaison entre fibres et qui dans l'invention est ultérieurement densifiable).

Comme matrice on utilise du carbone (autrement appelé coke de résine si l'on se réfère à la manière habituelle servant à obtenir ledit carbone). Mais le mot matrice n'implique pas que la totalité de l'espace situé entre les fibres de renforcement est occupée par une matière unique. L'expérience montre en effet que lorsqu'on réalise un matériau constitué de fibres de renforcement et d'une matrice de carbone par chauffage d'un matériau constitué de fibres de renforcement et d'une résine adéquate ladite résine en se pyrolysant et en se transformant en carbone donne naissance à une matière comportant une certaine porosité (porosité qui est variable tant en forme qu'en volume avec le type de renfort fibreux utilisé le type de résine utilisée et les conditions opératoires); dans ce cas, la matrice carbonée est donc formée essentiellement de carbone disposé autour des fibres de renforcement mais cette matrice comporte et délimite des "canaux".

Il est connu que pour obtenir le matériau final, les "canaux" de ce type peuvent être comblés à l'aide de diverses matières telles que du carbone (pyrocarbone, cokes de résine de brais) des résines organiques du carbure de silicium des métaux etc.

Il est donc clair que les produits selon l'invention pourront comporter, outre les fibres de renforcement revêtues et une matrice en carbone en coke de résine, au moins un autre matériau de remplissage tel que les produits cités ci-dessus.

Il est important selon l'invention que chacune des fibres du renfort fibreux soit enrobée par du carbone pyrolytique.

Cet enrobage a pour effet de désolidariser la fibre de renforcement d'avec le résidu de décomposition de la résine sans qu'on puisse préciser exactement à quel moment, au cours de la montée en température relative à l'opération de cokéfaction de la résine cette désolidarisation a lieu.

Il est donc important que chaque fibre soit parfaitement recouverte par une gaine de carbone et on utilise pour cela un procédé déjà connu, dit d'infiltration chimique en phase gazeuse qui conduit à un revêtement homogène et régulier de chaque fibre individuelle par des carbones connus sous le nom de carbones pyrolytiques ou pyrocarbones. Un tel procédé d'infiltration est avantageusement réalisé en mettant les fibres (tissu par exemple) en contact avec une atmosphère renouvelée d'hydrocarbure ($CH_4$ par exemple) maintenue sous pression réduite, et en portant l'ensemble à une température d'au moins 850°C.

L'invention consiste également dans un procédé de préparation des matériaux composites nouveaux tels que décrits. Ce procédé est caractérisé en ce que l'on réalise successivement les opérations suivantes:

- revêtement (gainage) des fibres de renforcement avec du pyrocarbone,
- imprégnation des fibres revêtues, par une résine,
- mise en forme de l'imprégné (drapage, moulage, compactage...)
- polymérisation de la résine (cuisson, postcuisson)
- traitement thermique, en atmosphère non oxydante jusqu'à 1 000°C environ, de la pièce en fibres revêtues et liées par la matrice résine, de façon à transformer ladite résine en carbone (coke de résine) on obtient alors un composite carbone-carbone
- éventuellement traitements supplémentaires tels que
- densification du composite obtenu par tout moyen déjà connu, en particulier par un procédé en phase gazeuse,
- et/ou traitement à haute température (dit de "graphitation" T > 2000°C).

En dehors du revêtement des fibres par le pyrocarbone, les diverses étapes du procédé sont individuellement connues du spécialiste.

Les exemples non limitatifs ci-après illustrent l'invention.

**Exemple 1**

On utilise un tissu de fibres de carbone à hautes caractéristiques mécaniques (par exemple fibre T 300 de la société Torray) de masse surfacique 220 g/m².

Ce tissu est placé dans une atmosphère renouvelée de méthane ($CH_4$) à une pression de 10 torr (1222 Pa) et l'ensemble est chauffé à 1050°C pendant 3 heures. A l'issue de ce traitement chaque fibre de carbone a été recouverte d'une gaine régulière de pyrocarbone, la gaine a une épaisseur d'environ 0,15 µm.

Un certain nombre de bandes de ce tissu ainsi traité ont été imprégnées avec une résine époxy. Dans ces bandes de tissu on découpe des strates qui sont empilées dans un moule et compactées sous presse.

La résine est ensuite polymérisée selon les indications du fournisseur.

On obtient ainsi une plaque en matériau composite fibres de carbone matrice époxy dans laquelle le taux de fibres est d'environ 50 % en volume.

Cette plaque est placée dans un four dont l'atmosphère est non oxydante ($N_2$, $H_2$, $H_e$, vide, etc.) et dont la température est progressivement portée à 1 000°C.

On obtient ainsi une plaque poreuse en composite fibres de carbone-matrice carbone coke de résine.

Cette plaque est placée dans un four d'infiltration en phase gazeuse de pyrocarbone selon un procédé connu par ailleurs dans le but de densifier la porosité résiduelle du matériau.

Dans cette plaque on usine des éprouvettes de flexion 3 points et on trouve que le matériau a une contrainte à rupture: .σF = 195 MPa.

**Exemple 2**

On procède comme décrit dans l'exemple 1 mais on ne traite pas le tissu comme décrit selon l'invention.

On obtient dans ces conditions σF = 70 MPa.

La comparaison entre l'exemple 1 et l'exemple 2 montre l'amélioration apportée par le traitement du renfort par le pyrocarbone effectué selon l'invention dans le cas d'un coke de résine époxy.

## Exemple 3

On réalise un matériau comme décrit dans l'exemple 1 mais on utilise une résine phénolique au lieu d'une résine époxy. On obtient en finale $\sigma F = 280$ MPa.

## Exemple 4

On réalise un matériau comme décrit dans l'exemple 3 mais on ne traite pas le tissu comme décrit dans l'invention.

On obtient en finale $\sigma F = 110$ MPa.

La comparaison entre l'exemple 3 et l'exemple 4 montre l'amelioration du renfort par le pyrocarbone selon l'invention dans le cas d'un coke de résine phénolique.

## Exemple 5

On réalise un matériau comme décrit dans l'exemple 1 mais on utilise une résine furanique au lieu d'une résine époxy.

On obtient en finale $\sigma F = 215$ MPa.

## Exemple 6

On réalise un matériau comme décrit dans l'exemple 5 mais on ne traite pas le tissu comme décrit dans l'invention.

On obtient en finale $\sigma F = 90$ MPa.

La comparaison entre l'exemple 5 et l'exemple 6 montre l'amélioration apportée par le traitement du renfort par le pyrocarbone selon l'invention dans le cas d'une résine furanique.

La comparaison respective des exemples 1, 3, 5 et 2, 4, 6 montre que l'amélioration observée en traitant le renfort selon l'invention est indépendante de la nature de la résine utilisée.

## Exemple 7

On réalise un matériau comme décrit dans l'exemple 3 mais on utilise un tissu constitué à partir de fibres de carbure de silicium SiC (marque "Nicalon" de la Société Nippon Carbon). On obtient en final un matériau composite fibres de carbure de silicium matrice carbone dont la résistance en flexion 3 points $\sigma F = 425$ MPa.

## Exemple 8

On réalise un matériau composite comme décrit dans l'exemple 7 mais on n'effectue pas de revêtement des fibres de SiC par du pyrocarbone selon l'invention.

On obtient en finale $\sigma F = 305$ MPa.

La comparaison entre l'exemple 7 et l'exemple 8 montre l'amélioration apportée par le traitement au pyrocarbone selon l'invention. La comparaison respective des exemples 3, 7 et 4, 8 montre que l'amélioration observée en traitant le renfort selon l'invention est indépendante de la nature de la fibre réfractaire de renforcement.

## Exemple 9

On réalise un matériau comme décrit dans l'exemple 3 mais on utilise un tissu de carbone d'un grammage plus faible (100 g/m$^2$).

On obtient $\sigma F = 345$ MPa.

## Exemple 10

On réalise un matériau comme décrit dans l'exemple 9 mais on effectue un traitement thermique du matériau à plus de 2 000° avant de le placer en infiltration finale.

On obtient $\sigma F = 269$ MPa.

## Exemple 11

On réalise un matériau comme dans l'exemple 9 mais on ne traite pas le tissu par le pyrocarbone selon l'invention.

On obtient $\sigma F = 76$ MPa.

## Exemple 12

On réalise un matériau selon l'exemple 10 mais on ne traite pas le tissu par le pyrocarbone selon l'invention.

On obtient $\sigma F = 197$ MPa.

La comparaison des exemples 9, 10, 11 et 12 montre que l'amélioration observée en traitant le renfort selon l'invention est conservée, même lorsqu'on fait subir au matériau un traitement à haute température.

## Exemple 13

On réalise un matériau comme décrit dans l'exemple 3 mais on effectue en finale une densification par infiltration de carbure de silicium (SiC).

On obtient $\sigma F = 226$ MPa.

**Exemple 14**

On réalise un matériau comme décrit dans l'exemple 13 mais on n'effectue pas le traitement du renfort au pyrocarbone selon l'invention.

On obtient σF = 59 MPa.

La comparaison des exemples 13 et 14 montre que l'amélioration observée en traitant le renfort selon l'invention est indépendante du mode de densification final de la porosité de la matrice carbone coke de résine.

**Exemple 15**

On réalise un matériau comme décrit dans l'exemple 1 mais on n'effectue pas le traitement final de densification par infiltration de pyrocarbone.

On obtient σF = 28 MPa.

On mesure la résistance à l'arrachement interstrate.

On obtient σF = 0,30 MPa.

**Exemple 16**

On réalise un matériau comme décrit dans l'exemple 15 mais on n'effectue pas le traitement de la fibre par le pyrocarbone tel que décrit selon l'invention.

On obtient σF = 45 MPa.

On mesure la résistance à l'arrachement interstrate.

On obtient σ = 0,42 MPa.

La comparaison des exemples 15 et 16 montre que le traitement au pyrocarbone selon l'invention a bien pour effet de diminuer les forces de liaison entre les fibres et la matrice.

**Exemple 17**

On réalise un matériau comme décrit dans l'exemple 1 mais on effectue la densification finale par réimprégnation par une résine furanique qui est ensuite polymérisée.

On obtient σF = 378 MPa.

**Exemple 18**

On réalise un matériau comme décrit dans l'exemple 17 mais on n'effectue pas le traitement de la fibre par le pyrocarbone tel que décrit selon l'invention.

On obtient σF = 314 MPa.

La comparaison des exemples 17 et 18 montre que l'avantage apporté par l'invention est conservé lorsqu'on effectue la densification finale par un autre moyen que l'infiltration en phase gazeuse.

**Revendications**

1 Matériau composite comprenant une matrice (3) en carbone coke de résine et un renfort fibreux réfractaire (1), caractérisé en ce que les fibres élémentaires du renfort fibreux ont été revêtues avant leur utilisation par une couche de carbone pyrolytique (2) dont l'épaisseur est comprise entre 0,01 μm et 1,0 μm.

2. Matériau selon la revendication 1, caractérisé en ce que le produit constitué par la matrice coke de résine et le renfort fibreux traité a été redensifié à l'aide d'une matière choisie parmi: les résines organiques les carbones (cokes de résines coke de brais pyrocarbones) les céramiques (carbures, nitiures oxydes...) et les métaux.

3. Procédé de préparation de matériaux selon la revendication 1, caractérisé en ce qu'on réalise les opérations:

a) revêtement des fibres de renfort par du carbone pyrolytique sans que ce dernier les lie entre elles,

b) imprégnation des fibres revêtues par une résine organique,

c) mise en forme et compactage de l'imprégné,

d) polymérisation de la résine,

e) traitement thermique du composite ainsi réalisé de façon à transformer ladite matrice résine en matrice carbone coke de résine.

4. Procédé de préparation d'un matériau selon la revendication 3, caractérisé en ce qu'on réalise une densification complémentaire du matériau obtenu en utilisant en particulier un procédé de densification par infiltration en phase gazeuse.

5. Procédé de préparation de matériau selon la revendication 4, caractérisé en ce qu'on fait subir au matériau un traitement thermique supplémentaire à haute température (T > 1000°C de préférence T > 2 000°C) avant ou après l'opération de densification complémentaire.

**Patentansprüche**

1. Verbundwerkstoff, umfassend eine Matrix (3) aus Harzkoks-Kohlenstoff und eine feuerfeste Faserverstärkung (1), dadurch gekennzeichnet, daß die Elementarfasern der Faserverstärkung vor ihrer Verwendung mit einer pyrolytischen Kohlenstoffschicht (2) überzogen worden sind, deren Dicke zwischen 0,01 μm und 1,0 μm beträgt.

2. Werkstoff nach Anspruch 1, dadurch gekennzeichnet, daß das aus der Harzkoks-Matrix gebildete Produkt und die behandelte Faserverstärkung mit einem Material, ausgewählt aus organischen Harzen, Kohlenstoffen (Harzkoks, Pechkoks, Pyrokohlenstoffen), Keramikmaterialien (Karbiden, Nitriden, Oxiden,...) und Metallen nachverdichtet worden ist.

3. Verfahren zur Herstellung von Werkstoffen nach Anspruch 1, dadurch gekennzeichnet, daß man die Schritte:

a) Überziehen der Verstärkungfasern mit pyrolytischem Kohlenstoff, ohne daß letzterer diese miteinander verbindet,

b) Imprägnieren der mit einem organischen Harz überzogenen Fasern,

c) Formen und Kompaktieren des Imprägnierten,

d) Polymerisieren des Harzes,

e) Wärmebehandlung des so hergestellten Verbundes in einer Weise, daß die Harzmatrix in eine Harzkoks-Kohlenstoff -Matrix übergeht, durchführt.

4. Verfahren zur Herstellung eines Werkstoffs nach Anspruch 3, dadurch gekennzeichnet, daß man eine zusätzliche Verdichtung des erhaltenen Werkstoffs vornimmt, indem man insbesondere ein Verdichtungsverfahren durch Infiltration in Gasphase einsetzt.

5. Verfahren zur Herstellung von Werkstoff nach Anspruch 4, dadurch gekennzeichnet, daß man den Werkstoff einer zusätzlichen Wärmebehandlung bei hoher Temperatur (T > 1000°C, vorzugsweise T > 2000°C) vor oder nach dem zusätzlichen Verdichtungschritt unterzieht.

## Claims

1. A composite material, of the type comprising a matrix (3) in resin coke carbon and a refractory fibrous reinforcement (1), characterized in that the elementary fibers composing the fibrous reinforcement are coated before use with a layer of pyrolytic carbon (2) the thickness of which layer can vary between 0.01 μm and 1.0 μm.

2. A material according to claim 1, characterized in that the product constituted by the resin matrix and the treated fibrous reinforcement is redensified by means of a material such as: organic resins, carbons (resins cokes, tar cokes, pyrocarbons), ceramics (carbides, nitrides, oxides,...) or metals.

3. Method of preparing materials according to claim 1, characterized in that said method consists in:

a) coating the reinforcement fibers with pyrocarbon without the latter binds the fibers one with the other,

b) impregnating the coated fibers with an organic resin,

c) shaping and densifying the impregnated mass,

d) polymerizing the resin,

e) heat-treating the composite material thus obtained so as to transform said matrix into a resin coke carbon matrix.

4. Method of preparing materials according to claim 3, characterized in that a complementary densification of the resulting material is carried out, using in particular the chemical vapor infiltration densifying method.

5. Method of preparing materials according to claim 4, characterized in that said material is subjected to a further heattreatment at high temperature (T > 1000°C, and preferably T > 2000°C) before or after the complementary densification operation.

Fig-1

Fig-2